Europäisches Patentamt

(19) European Patent Office

Office européen des brevets

(11) Veröffentlichungsnummer: **0 079 882**
**B1**

(12) **EUROPÄISCHE PATENTSCHRIFT**

(45) Veröffentlichungstag der Patentschrift:
25.09.85

(21) Anmeldenummer: **81901526.4**

(22) Anmeldetag: **27.05.81**

(86) Internationale Anmeldenummer:
**PCT/DE 81/00077**

(87) Internationale Veröffentlichungsnummer:
**WO 82/04305 (09.12.82 Gazette 82/29)**

(51) Int. Cl.⁴: **F 24 J 2/24, E 04 D 13/18**

(54) DACH MIT SCHUPPENARTIG SICH ÜBERLAPPENDEN DACHDEKUNGSELEMENTEN.

(43) Veröffentlichungstag der Anmeldung:
**01.06.83 Patentblatt 83/22**

(45) Bekanntmachung des Hinweises auf die Patenterteilung:
**25.09.85 Patentblatt 85/39**

(84) Benannte Vertragsstaaten:
**FR**

(56) Entgegenhaltungen:
**EP - A - 0 026 862**
**CH - A - 622 339**
**DE - A - 2 853 287**
**DE - U - 7 820 719**
**US - A - 4 197 834**
**US - A - 4 204 520**

(73) Patentinhaber: **Josef Meindl Beteiligungs-oHG Dorfen, D-8250 Dorfen 1 (DE)**

(72) Erfinder: **HUBER, Paul, Post Reichertsheim, D-8251 Gut Thambach (DE)**
Erfinder: **RÖHRL, Josef, Postfach 141, D-8250 Dorfen Kl.Mersen (DE)**

(74) Vertreter: **Eder, Eugen, Dipl.-Ing. et al, Patentanwälte Dipl.-Ing. E. Eder Dipl.-Ing. K. Schleschke Elisabethstrasse 34, D-8000 München 40 (DE)**

**Beschreibung**

Die Erfindung bezieht sich auf eine Dacheindeckung aus schuppenartig einander überlappenden Dachdeckungselementen, die an ihrer Unterseite mit gesonderten Lagerelementen in Berührung stehen, welche die Leitungen eines von einer Wärmeträgerflüssigkeit durchflossenen, mit einer Vorrichtung zur Wärmegewinnung in Verbindung stehenden Leistungssystems aufnehmen und in die Überdeckungsfugen zwischen den Dachdeckungselementen eingreifen.

Als Stand der Technik ist bereits ein sogenanntes Energieziegeldach bekannt. Dieses Energiedach arbeitet nach dem Absorberprinzip. Die Dachdeckungselemente müssen hierbei besonders geformt ausgebildet sein, um die Leitungen des Leistungssystems unterseitig aufnehmen zu können. Damit ist der Anwendungsbereich dieser bekannten Energieziegeldächer bislang beschränkt gewesen, wobei ausserdem die einzelnen Dachdeckungselemente infolge ihrer besonderen Gestaltung kostenaufwendig waren.

Als Stand der Technik, von dem die Erfindung ausgeht, ist eine Dacheindeckung bekannt, wobei unterseitig der Dacheindeckungsplatten jeweils ein Flansch aus gut wärmeleitendem Material vorgesehen ist, welcher mit einem innen profilierten Sternrohr in Verbindung steht (DE-GM 7 820 719).

Durch diese Konstruktion wird nachteiligerweise die Wärmeüberdeckungsfuge nur zum Teil zur Wärmenutzung herangezogen. Darüber hinaus ergibt sich ein hoher Materialaufwand, da der mit dem Sternrohr verbundene Flansch über die Überdeckungsfuge hinaus zwischen zwei einander überlappenden Dacheindeckungsplatten liegt. Hierdurch treten grosse Wärmeleitwege auf, wobei ausserdem der Nachteil entstehen kann, dass sich Kondenswasser bildet, welches in den Zwischenraum tropft.

Die vorhandene freie Fläche wirkt hierbei also in bestimmten Fällen nachteiligerweise als Kühlfläche und als Kondensationsfläche. Damit finden bei dieser bekannten Konstruktion zwar handelsübliche, nicht speziell ausgebildete, schuppenartig sich einander überlappende Dacheindeckungsplatten Anwendung, wobei jedoch der Wirkungsgrad für die Wärmenutzung gering ist.

Zum Stand der Technik fällt weiterhin eine Vorrichtung zur Gewinnung nutzbarer Wärme aus der natürlichen und/oder künstlichen Umwelt (DE-AS 2 853 287). Hierbei müssen die Dacheindeckungsplatten wiederum eine spezielle konstruktive Ausbildung haben, um die entsprechenden Rohre des Leitungssystems aufzunehmen. Damit ergibt sich wiederum der Nachteil einer speziellen Gestaltung für die Dacheindeckungsplatten und damit eines erheblich eingeschränkten Anwendungsbereiches.

Aufgabe der vorliegenden Erfindung ist es nun, bei einer aus normalen Dachdeckungselementen gebildeten Dacheindeckung der im Oberbegriff des Anspruchs 1 genannten Art die Lagerelemente auf möglichst einfache Weise so auszubilden und anzuordnen, dass eine besonders hohe Ausbeute an Wärmeenergie erzielt wird, ohne dass dabei in den Dachinnenraum abtropfendes Kondenswasser anfällt.

Diese Aufgabe wird erfindungsgemäss dadurch gelöst, dass die Leitungen des Leitungssystems vollständig in die Lagerelemente eingebettet sind, dass diese ausschliesslich im Bereich der Überdeckungsfugen angeordnet sind und dass die Lagerelemente mit den jeweiligen Dachdeckungselementen in Kontakt stehen. Hierdurch ergibt sich vorteilhafterweise bei Einsatz von normalen Dachdeckungselementen eine Optimierung der Wärmegewinnung, wobei zusätzlich die Leitungen des Leitungssystems einfach ausgebildet sind.

Nach einem anderen Merkmal der Erfindung kann das Lagerelement jeweils aus einem U-förmig gebogenen Blechteil bestehen, in dessen Schenkel gegen die Dachdeckungselemente hin offene Nuten zur Aufnahme der Leitungen des Leitungssystems eingeformt sind. Der die beiden Schenkel des Blechteils verbindende Steg kann federnd ausgebildet sein, wobei zwischen den freien Enden der beiden Schenkel des Blechteils Abstandhalter vorgesehen sind. Als Abstandhalter können hierbei beispielsweise Stahlfedern oder Gummipuffer Anwendung finden. Damit ergibt sich für dieses Lagerteil ein einfach aufgebautes und bereits vorzufertigendes Teil, welches einwandfrei die Leitungen des Leitungssystems führt und sich dem Zwischenraum zwischen den beiden Dachdeckungselementen anpasst. Durch die Abstandhalter ergibt sich auf einfache Weise ein guter Ausgleich der Toleranzen.

Nach einem weiteren Merkmal der Erfindung ist es möglich, dass die Lagerelemente jeweils aus einem Strangpressprofil bestehen, in das die Leitungen des Leitungssystems eingeformt sind. Hierbei können neben den eingeformten Leitungen jeweils Hohlräume vorgesehen sein. Das gesamte Lagerelement kann aus Aluminiumstrangpressprofil hergestellt werden. Auch hieraus resultiert eine einfach Herstellung des Lagerelements mit einer weiteren Vereinfachung insofern, als die Leitungen bereits in das Profil eingeformt sind.

Nach einem anderen Merkmal der Erfindung können die Lagerelemente jeweils aus einem profilierten Stahlblech und aus einem darauf aufgeschweissten ebenen Blech bestehen, wobei die zwischen den beiden Blechen gebildeten Leitungen stirnseitig abgeschlossen und mit Anschlussleitungen versehen sind. Wiederum bilden diese Lagerelemente einfach aufgebaute und schnell herstellbare Teile.

Die Erfindung wird nachfolgend anhand von in der Zeichnung dargestellten Ausführungsbeispielen näher beschrieben. In der Zeichnung zeigen:

Fig. 1 eine Seitenansicht zweier Dachdeckungselemente im Schnitt, teils gebrochen;

Fig. 2 eine andere Ausführungsform des erfindungsgemässen Daches mit Biberschwanzziegeln;

Fig. 3 eine Ausführungsform eines Lagerelements aus Aluminiumstrangpressprofil;

Fig. 4 eine Ausführungsform des Lagerelements mit ebenem Stahlblech und Stahlprofil;

Fig. 5 die Draufsicht auf das Lagerelement nach Fig. 4, teils gebrochen;

Fig. 6 eine Draufsicht auf einen Muldenziegel mit Labyrinthdichtung, teils gebrochen.

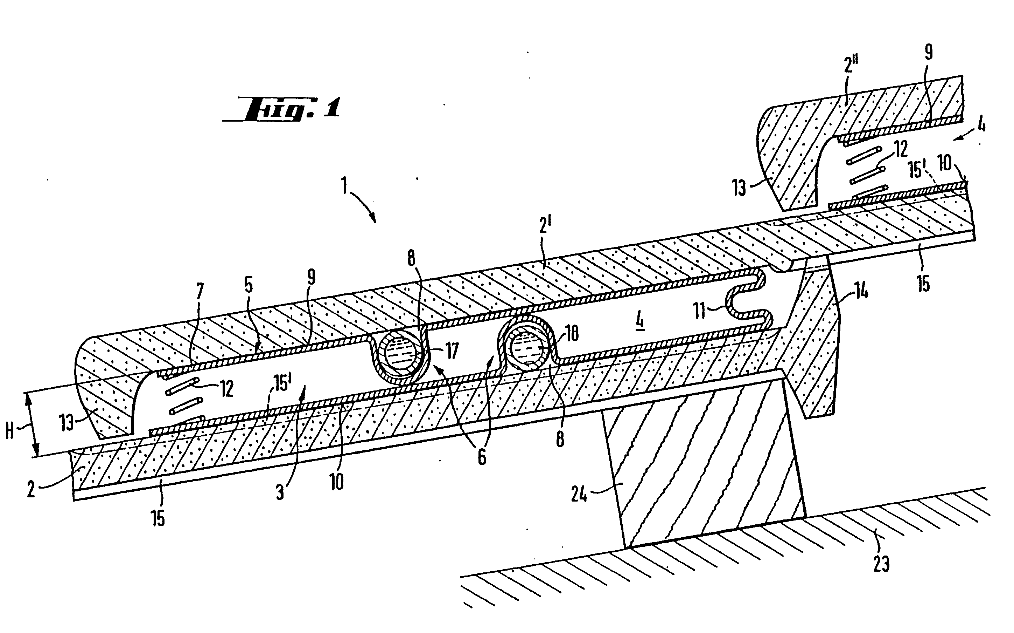

Das in Fig. 1 bruchstückhaft dargestellte Dach weist mehrere, schuppenartig einander überdeckende Dachdeckungselemente 2, 2' und 2'' auf, welche auf Dachlatten 24 aufruhen, die auf Dachsparren 23 befestigt sind. Die Dachdeckungselemente 2 und 2' sind so angeordnet, dass sich eine Überdeckung 3 für das Dach 1 ergibt. Diese Überdeckung 3 bildet einen Zwischenraum 4 zwischen der Oberseite des Dachdeckungselementes 2 und der Unterseite des Dachdeckungselementes 2', bzw. zwischen der Oberseite des Dachdeckungselementes 2' und der Unterseite des Dachdeckungselementes 2''. In diesem Zwischenraum 4 sind Leitungen 17 und 18 eines Leitungssystems 6 angeordnet.

Es ergibt sich hierdurch ein Energieziegeldach, welches nach dem Absorber-Prinzip arbeitet. In den Absorberleitungen 17 und 18, welche zwischen den beiden Dachdeckungselementen 2 und 2' bzw. 2 und 2'' angeordnet sind, fliesst ein Kühlmittel, dessen Temperatur stets niedriger gehalten wird als die Umgebungstemperatur, d.h. als die Temperatur der Dachdeckungselemente 2, 2' und 2''. Das Kühlmittel erwärmt sich infolge natürlicher Strahlungsenergie und Konvektion, während es die Leitungen 17 und 18 durchströmt und absorbiert so Wärme aus der Umgebung.

Eine nicht näher dargestellte Wärmepumpe entzieht der Kühlflüssigkeit diese Wärme und kühlt diese wieder ab. Die durch die Wärmepumpe entzogene Wärmeenergie wird auf eine höhere Temperaturstufe gebracht und steht dann als Brauchwärme für Heizungs- und Warmwasserversorgung zur Verfügung.

Wie aus Fig. 1 ersichtlich, sind die Leitungen 17 und 18 des Leitungssystems 6 in Nuten 8 eingebettet, welche in ein Lagerelement 5 eingeformt sind. Dieses aus Blech bestehende Lagerelement 5 ist U-förmig ausgebildet mit den beiden Schenkeln 9 und 10, sowie mit dem Steg 11, welcher als Federbalg gestaltet sein kann. In die beiden Schenkel 9 und 10 sind die Nuten 8 eingeformtm, und zwar so, dass sie sich jeweils gegen den anderen Schenkel 8 erstrecken. Innerhalb dieser Nuten befinden sich die Leitungen 17 und 18. Die Schenkel 9 und 10 liegen hierbei in dichter Berührung mit der Unterseite bzw. der Oberseite der jeweiligen Dachdeckungselemente 2 und 2', so dass sich eine sehr gute Kontaktfläche und damit ein sehr guter Wärmeübergang ergibt. Da in dem Zwischenraum das Lagerelement 5 angeordnet ist, dient dieses gleichzeitig als Dichtung innerhalb des Zwischenraums 4.

Im vorderen Bereich ist das Lagerelement 5 mit mindestens einer Abstandhalterung 12 versehen, welche beispielsweise als Stahlfeder oder als Gummielement ausgebildet sein kann. Durch dieses federnde Abstandsstück sowie durch den federnden Steg 11 ist es möglich, Toleranzen auszugleichen, wie sie durch den stirnseitigen, nach unten gerichteten Falz 13 sowie den rückseitigen, nach oben gerichteten Falz 14 des Dachdeckungselementes 2 auftreten können.

Das Lagerelement 5 lässt sich hierbei in seiner dargestellten Form vorab herstellen und mit den Leitungen versehen, wonach beim Aufbau des Daches die gesamte Anordnung entsprechend in dem Zwischenraum angeordnet wird.

Die Dachdeckungselemente 2, 2' und 2'', welche als Ziegel ausgebildet sind, können oberseitig und unterseitig mit Tropfrippen 15 und 15' versehen sein. Weiterhin liegt, wie in Fig. 1 dargestellt, das Dachdeckungselement 2' auf dem Lagerelement 5 auf, so dass sich nicht nur eine sehr gute Kontaktfläche ergibt, sondern auch die Toleranzen infolge der nach oben bzw. nach unten gerichteten Falze 14 und 13 ausgeglichen werden. Bei flachen Ziegeln ist hierbei keine weitere Dichtung erforderlich. Das Lagerelement 5 weist hierbei eine Höhe H auf, welche die Höhe des Zwischenraums 4 bestimmt.

Wie bereits ausgeführt, können die Dachdeckungselemente in Form von Ziegeln 2, 2' und 2'' beschaffen sein, wobei diese Ziegel handelsübliche Form aufweisen.

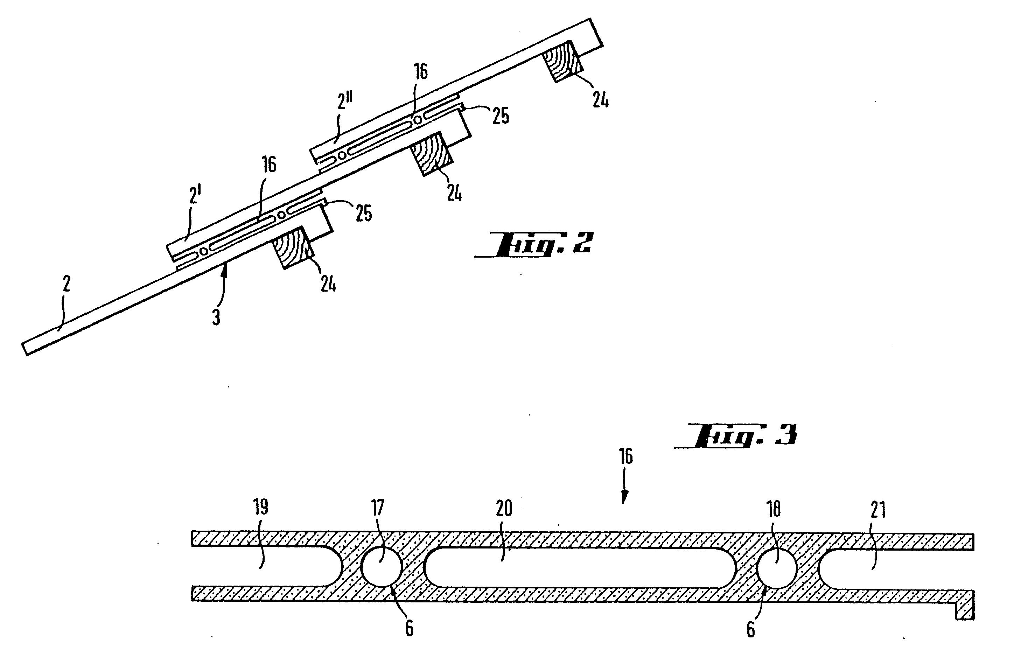

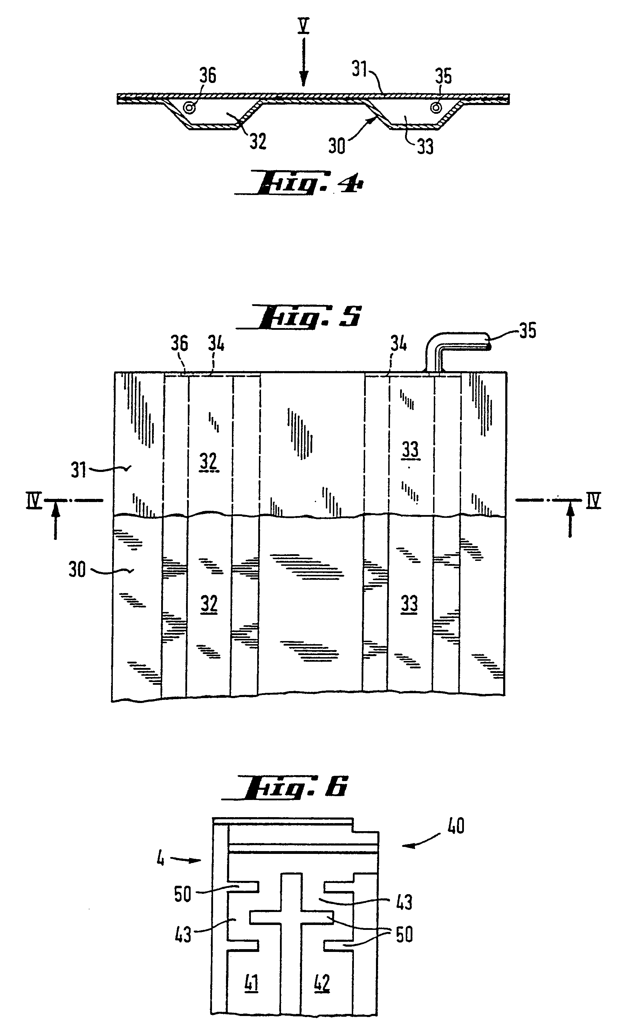

In Fig. 2 ist ein Biberschwanzdach mit Biberschwanzziegeln, welche die Dachdeckungselemente 2, 2' und 2'' bilden, in Seitenansicht dargestellt. Wiederum liegt eine schuppenartige Überdeckung 3 vor, wobei in dieser Überdeckung 3 die erfindungsgemässen Lagerelemente eingebracht sind. Hierbei können als Lagerelemente Aluminiumstrangpressprofile 16 Anwendung finden, welche in Fig. 3 näher dargestellt sind. Wie ersichtlich, sind in dieses Aluminiumstrangpressprofil 16 die Leitungen 17 und 18 des Leitungssystems 6 bereits eingeformt.

Vor, zwischen und hinter den Leitungen 17 und 18 weist das Aluminiumstrangpressprofil 16 Hohlräume 19, 20 und 21 auf. Nach Fig. 2 wird dieses Aluminiumstrangpressprofil in die Überdeckung 3 zwischen den jeweiligen Dachdeckungselementen 2, 2' und 2'', d.h. den Biberschwanzziegeln, eingebracht, welche auf den Dachlatten 24 in an sich bekannter Weise aufruhen. Da das Lagerelement 16 einen sehr guten Flächenkontakt mit den Biberschwanzziegeln hat, ist eine sehr gute Wärmeübertragung gewährleistet.

Erfindungsgemäss lassen sich damit an sich bekannte Ziegeldachelemente verwenden, wobei die schuppenartige Überdeckung so beschaffen ist, dass ein Zwischenraum entsteht, in den ein beispielsweise in Fig. 1 und 3 dargestelltes Lagerelement einbringbar ist, das mit den Leitungen des Leitungssystems ausgestattet wird.

Nach Fig. 4 und 5 kann das Lagerelement zweistückig ausgebildet sein, und aus einem Stahlprofil 30 sowie einem ebenen Blech 31 bestehen. An den Rändern und im mittleren Bereich sind die beiden Teile 30 und 31 miteinander dicht verschweisst. Das Stahlprofil 30 weist im vorliegenden Fall zwei Profilbahnen 32 und 33 auf, welche zum Transport und zur Führung des flüssigen Mediums dienen. Wie aus Fig. 5 ersichtlich, sind die Profilbahnen 32 und 33 durch Abschlusswände 34 einseitig verschlossen, wobei nach Fig. 5 die rechte Profilbahn 33 mit einem Rohr versehen ist, welche als Abschlussleitung 35 dient. Die Profilbahn 32 kann hierbei nach Fig. 4 eine Rohröffnung 36 aufweisen, an welche ein nicht näher dargestelltes Abflussrohr angeschlossen werden kann.

Durch die in Fig. 4 und 5 dargestellte Konstruktion des Lagerelementes mit dem Stahlprofil 30 und dem flachen Blechteil 31 wird auf einfache Weise ein Lagerelement geschaffen, welches ebenfalls bereits integriert die Leitungen in Form der Profilbahnen 32 und 33 aufweist.

Werden Muldenziegel, beispielsweise Falzziegel, verwendet, wobei die einander teilweise überdeckenden Ziegel einen Zwischenraum im Sinne der vorliegenden Erfindung bilden, so können nach Fig. 6 die Mulden 41 und 42 eines Muldenziegels 40 mit Labyrinthdichtungen 43 in Form von Stegen 50 versehen sein, welche sich im vorderen Bereich des Ziegels befinen. Diese Labyrinthdichtungen ergeben im Zusammenwirken mit dem Falz 13 des Lagerelementes eine gute Dichtwirkung, so dass der Zwischenraum 4 einwandfrei vor Witterungseinflüssen geschützt ist.

Durch die Labyrinthdichtung mit den einander versetzt gegenüberliegenden einzelnen Stegen zwischen den Mulden 41 und 42 wird in Zusammenwirken mit dem überdeckenden Bereich des darüber angeordneten Dachdeckungselementes, d.h. des Muldenziegels, eine sehr gute Abdichtung auf einfache Weise geschaffen.

Nach einem nicht näher dargestellten Ausführungsbeispiel der Erfindung besteht auch die Möglichkeit, dass die Ziegel im Bereich des Zwischenraumes oberseitig mit Haltenoppen versehen sind. An diese Haltenoppen können sich die Leitungen des Leitungssystems anlegen und hierbei von den einander überdeckenden Bereichen der Dachdeckungselemente eingeklemmt werden, so dass auf einfache Weise eine weitere gute Halterung der Leitungen des Leitungssystems gegeben ist.

In jedem Fall wird ein Dach mit an sich bekannten Ziegeldachformen und anderen Dachdeckungselementen verwendet, wobei über ein einfach gestaltetes Lagerelement die Leitungen des Leitungssystems in den Zwischenraum eingebracht werden können.

### Patentansprüche

1. Dacheindeckung mit schuppenartig einander überlappenden Dachdeckungselementen, die an ihrer Unterseite mit gesonderten Lagerelementen in Berührung stehen, welche die Leitungen eines von einer Wärmeträgerflüssigkeit durchflossenen, mit einer Vorrichtung zur Wärmegewinnung in Verbindung stehenden Leitungssystems aufnehmen und in die Überdeckungsfugen zwischen den Dachdeckungselementen eingreifen, dadurch gekennzeichnet, dass die Leitungen (17, 18; 32, 33) des Leitungssystems vollständig in die Lagerelemente (5; 16) eingebettet sind, dass diese ausschliesslich im Bereich der Überdeckungsfugen (3) angeordnet sind und dass die Lagerelemente (5; 16) mit den jeweiligen Dachdeckungselementen in Kontakt stehen.

2. Dacheindeckung nach Anspruch 1, dadurch gekennzeichnet, dass die Lagerelemente (5) jeweils aus einem U-förmig gebogenem Blechteil bestehen, in dessen Schenkel (9, 10) gegen die Dacheindeckungsplatten (2) hin offene Nuten (8) zur Aufnahme der Leitungen (17, 18) des Leitungssystems eingeformt sind.

3. Dacheindeckung nach Anspruch 2, dadurch gekennzeichnet, dass der die beiden Schenkel (9, 10) des Blechteils verbindende Steg (11) federnd ausgebildet ist.

4. Dacheindeckung nach Anspruch 2 oder 3, dadurch gekennzeichnet, dass zwischen den freien Enden (7) der beiden Schenkel (9, 10) des Blechteils Abstandhalter (12) vorgesehen sind.

5. Dacheindeckung nach Anspruch 4, dadurch gekennzeichnet, dass die Abstandhalter (12) als Stahlfedern oder als Gummipuffer ausgebildet sind.

6. Dacheindeckung nach Anspruch 1, dadurch gekennzeichnet, dass die Lagerelemente (16) jeweils aus einem Strangpressprofil bestehen, in das die Leitungen (17, 18) des Leitungssystems eingeformt sind.

7. Dacheindeckung nach Anspruch 6, dadurch gekennzeichnet, dass in den Lagerelementen (16) neben den eingeformten Leitungen (17, 18) jeweils ein Hohlraum (19, 20, 21) vorgesehen ist.

8. Dacheindeckung nach Anspruch 1, dadurch gekennzeichnet, dass die Lagerelemente jeweils aus einem profilierten Stahlblech (30) und aus einem darauf aufgeschweissten ebenen Blech (31) bestehen, wobei die zwischen den beiden Blechen (30, 31) gebildeten Leitungen (32, 33) stirnseitig abgeschlossen und mit Anschlussleitungen (35, 36) versehen sind.

### Claims

1. A roof covering having roofing elements which overlap one another in an imbricated manner and which at their underside are in contact with separate bearing elements, which elements receive the ducts of a conduit system, flowed through by a heat carrier fluid and communicating with a device for heat extraction, and engage into lap joints between the roofing elements, characterised in that the ducts (17, 18, 32, 33) of the conduit system are completely embedded in the bearing elements (5, 16), in that these are arranged exclusively in the region of the lap joints (3), and in that the bearing elements (5, 16) are in contact with the respective roofing elements.

2. A roof covering according to claim 1, characterised in that the bearing elements (5) each consist of a sheet-metal part which is bent in a U-shaped manner and into the limbs (9, 10) of which grooves (8), open towards the roofing tiles (2), are formed for the reception of the ducts (17, 18) of the conduit system.

3. A roof covering according to claim 2, characterised in that the web (11) which connects the two limbs (9, 10) of the sheet-metal part is flexible in design.

4. A roof covering according to claim 2 or 3, characterised in that distance pieces (12) are provided between the free ends (7) of the two limbs (9, 10) of the sheet-metal part.

5. A roof covering according to claim 4, characterised in that the distance pieces (12) are designed as steel springs or as rubber buffers.

6. A roof covering according to claim 1, characterised in that the bearing elements (16) each consist of an extrusion profile in which the ducts (17, 18) of the conduit system are integrally formed.

7. A roof covering according to claim 6, characterised in that, in each bearing element (16) a cavity (19, 20, 21) is provided adjacent the integrally formed ducts (17, 18).

8. A roof covering according to claim 1, characterised in that each bearing element consists of a profiled steel plate (30) and a flat plate (31) welded thereto, in which respect the ducts (32, 33) formed between the two plates (30, 31) are closed off at the front side and are provided with connection pipes (35, 36).

## Revendications

1. Toiture comportant des éléments de couverture se recouvrant à la manière d'écailles qui sont en contact à leur partie inférieure avec des éléments-supports particuliers supportant les conduites d'un système de conduites dans lesquelles circule un liquide transporteur de chaleur, système de conduites en liaison avec un dispositif de production de chaleur, et qui viennent se prendre dans les joints de chevauchement entre les éléments de couverture, caractérisée en ce que les conduites (17, 18; 32, 33) du système de conduites sont complètement encastrées dans les éléments-supports (5; 16), ces derniers sont uniquement placés dans la zone des joints de chevauchement (3) et les éléments-supports (5; 16) sont en contact avec les éléments de couverture correspondants.

2. Toiture suivant la revendication 1, caractérisée en ce que les éléments-supports (5) consistent chacun en une pièce de tôle cintrée en forme de U dont les branches (9, 10) placées vers les éléments de couverture (2) comportent des gorges (8) ouvertes permettant d'y placer les conduites (17, 18) du système de conduites.

3. Toiture suivant la revendication 2, caractérisée en ce que l'entretoise (11) rattachant les deux branches (9, 10) de la pièce de tôle est élastique.

4. Toiture suivant la revendication 2 ou 3, caractérisée en ce que des écarteurs (12) sont prévus entre les extrémités libres (7) des deux branches (9, 10) de la pièce de tôle.

5. Toiture suivant la revendication 4, caractérisée en ce que les écarteurs (12) consistent en des ressorts en acier ou des butoirs en caoutchouc.

6. Toiture suivant la revendication 1, caractérisée en ce que les éléments-supports (16) consistent chacun en un profilé extrudé dans lequel les conduites (17, 18) du système de conduites sont formées.

7. Toiture suivant la revendication 6, caractérisée en ce qu'une cavité (19, 20-21) est prévue dans les éléments-supports (16) près des conduites formées (17, 18).

8. Toiture suivant la revendication 1, caractérisée en ce que les éléments-supports consistent chacun en une tôle d'acier profilée (30) et une tôle plate rapportée par soudure (31), les conduites (32, 33) formées entre les deux tôles (30, 31) étant obturées du côté frontal et équipées de conduites de raccordement (35, 36).

Fig. 1

**Fig. 2**

**Fig. 3**

*Fig. 4*

*Fig. 5*

*Fig. 6*